# EUROPÄISCHE PATENTSCHRIFT

(11) **EP 2 023 113 B1**
(45) Veröffentlichungstag und Bekanntmachung des Hinweises auf die Patenterteilung: **27.06.2012**
(21) Anmeldenummer: 08012187.4
(22) Anmeldetag: 05.07.2008
(51) Int. Cl.: G01L 23/18, G01L 19/04, G01L 19/06

(54) **Membrandrucksensor**
Diaphragm pressure sensor
Capteur de pression à membrane

(30) Priorität: 27.07.2007 DE 102007035660
(43) Veröffentlichungstag der Anmeldung: 11.02.2009
(73) Patentinhaber: KMW Kaufbeurer Mikrosysteme Wiedemann GmbH, 87600 Kaufbeuren (DE)
(72) Erfinder: Holzheu, Herbert, 87616 Marktoberdorf (DE)
(74) Vertreter: Pfister, Stefan Helmut Ulrich

(56) Entgegenhaltungen:
- DE-A1- 19 706 837
- DE-U1- 29 716 060
- US-A1- 2004 237 629
- US-A1- 2005 229 709

## Beschreibung

Die Erfindung betrifft einen Drucksensor, bestehend aus einem Sensorträger, an welchem ein eine Membran aufnehmender Membranträger angeordnet ist und der Sensorträger einen Verbindungskanal aufweist, um den vor der Membran angeordneten Membranraum mit dem Druckmessraum zu verbinden.

Die erfindungsgemäßen Drucksensoren werden z. B. für die Druckmessung in Verbrennungsmotoren eingesetzt. Der Arbeitsraum des Verbrennungsmotors wäre in diesem Fall der Druckmessraum. Die Erfindung ist aber auf diesen speziellen Anwendungsfall in keinster Weise beschränkt.

Durch die Kenntnis beim Verbrennungsprozess herrschenden Druckes ist es möglich, den Verbrennungsprozess entsprechend zu optimieren und insbesondere die eingesetzten Energieträger effizienter zu verwenden.

Die bei dem Verbrennungsprozess entstehende Druckwelle wird begleitet von einer Temperaturwelle aufgrund des explosionsartig ablaufenden Verbrennungsprozesses. Dabei trifft diese Temperaturschockwelle mit der Druckwelle auf den Sensor, d. h. insbesondere die Membran des Sensors. Die Membran weist eine entsprechende Messvorrichtung auf, um ihre druckbedingte Verformung zu messen und daraus den entsprechend anliegenden Druck zu bestimmen.

Nun erfährt die Membran nicht nur eine mechanische Belastung aufgrund der Druckwelle, sondern sie wird auch aufgrund der Temperaturschockwelle mechanisch beansprucht. Aufgrund der temperaturabhängigen Längenausdehnung wird die Membran allein aufgrund des Temperaturniveaus ebenfalls mechanisch deformiert und führt zu einem Messfehler, da der Effekt nicht druckabhängig ist.

Üblicherweise ist der Sensor in der Nähe des Druckmessraumes, z. B. im Motorblock, eingebaut, welcher durch Kühlwasser gut gekühlt ist. Daher ist auch der Sensor im allgemeinen thermisch gut mit dem Motorblock verbunden und daher auch gut gekühlt.

Der bei normalen Betriebstemperaturen, z. B. auf 80°C gehaltene Sensor, erfährt dann in periodischen Zyklen, entsprechend dem Verbrennungsprozess, eine thermische Spitzenbelastung von mehreren Hundert Grad an der Membran. Dies führt zu einem großen Temperaturgradienten im Membranträger und insbesondere in der Membran mit der Gefahr, dass die verschiedenen Dehnmessstreifen, die die Messvorrichtung bilden und nach einer Wheatstonschen Brückenschaltung miteinander verbunden sind, ein unterschiedliches Temperaturniveau besitzen und daher ebenfalls zu erheblichen Messfehlern beitragen können.

Es ist Ziel der vorliegenden Erfindung Drucksensoren, wie eingangs beschrieben, dahingehend zu verbessern, um deren Genauigkeit zu erhöhen.

Gelöst wird diese Aufgabe durch ein Drucksensor wie eingangs beschrieben, wobei vorgeschlagen wird, dass mindestens eine Umlenkung vorgesehen ist, durch welche die von dem Druckmessraum durch den Verbindungskanal in den Membranraum laufende Gasdruckwelle eine Kühlung erfährt.

Im Stand der Technik ist es bekannt, eine möglichst geradlinige Verbindung zwischen der Membran und dem Druckmessraum durch den Verbindungskanal, welcher z. B. als Bohrung ausgebildet ist, zur Verfügung zu stellen. Da aber gleichzeitig die Membran aufgrund ihrer Messaufgabe als fragiles, geringen Wärmeübergängen ausgestattetes Bauteil ausgeführt ist, ist die Wärmeableitung aufgrund des Auftreffens des Temperaturschockes nicht optimal.

Derartige mit Nachteilen behaftete Drucksensoren werden beispielsweise in den Druckschriften US 2004/0237629, DE 297 16 060 und US 2005/0229709 gezeigt. Hier kommt es zu einem direkten Anströmen der Membrane, die mit den zuvor genannten Nachteilen einher gehen kann. Einen Drucksensor jedoch zur Messung von Drücken in Hydraulikflüssigkeiten zeigt die DE 197 06 837. Hier wird durch eine Umlenkung das Auftreten von Druckspitzen dadurch verhindert, dass es zu einer Verwirbelung kommt und die Druckspitzen somit gebrochen werden. Hierdurch wird jedoch eine Messung des tatsächlich anliegenden Druckes unmöglich.

Der Effekt der erfingdungsgemäß vorgesehenen Umlenkung stellt sich in zweierlei Hinsichten ein.

Zunächst bewirkt die Umlenkung, dass die eintretende Gasdruckwelle die Membran nicht direkt anströmt, sondern an der Umlenkung als separates Bauteil geführt und dort natürlich auch gekühlt wird. Des Weiteren bewirkt die Umlenkung, dass die Gasdruckwelle nicht direkt die Membran anströmt, sondern zunächst z. B. an dem Membranträger entlang streicht und auch dort eine entsprechende Kühlung erfährt. Dabei wird geschickterweise die Anordnung so gewählt, dass die im Verbindungskanal hoch laufende Gasdruckwelle zunächst den Membranträger und erst dann die Membran erreicht und so eine möglichst gleichmäßigere Erwärmung des Membranträgers und der Membran aufgrund des unvermeidlichen Temperaturschocks, der mit der Gasdruckwelle einhergeht, erfolgt.

Hieraus resultiert letztendlich eine homogenere bzw. mit einer geringeren Temperaturgradienten versehene Erwärmung des Membranträgers und der Membran, die zu einer entsprechenden Vermeidung der Messfehler aufgrund unterschiedlichen Temperaturen an den Dehnmessstreifen bzw. der Messvorrichtung an der Membran führt.

Die Umlenkung führt also selber aufgrund ihrer gegenständlichen Ausführung zu einer Kühlung des zum Membranraum laufenden Gasdruckwelle bzw. die Umlenkung sorgt dafür, dass die Gasdruckwelle zunächst an andere Bereiche, z. B. des Membranträgers gelenkt wird und auch hier Temperatur abgibt bzw. den Membranträger derart erwärmt, dass sich ein geringer Temperaturgradient an diesem einstellt.

In einer bevorzugten Variante der Erfindung ist vorgesehen, dass in Richtung des Verbindungskanales die Membran von der Umlenkung verdeckt ist. Es besteht zwar eine räumliche Verbindung, um die Druckmessung ausführen zu können, aber durch die Umlenkung erfährt die Membran auch einen mechanischen Schutz vor z. B. in den Verbindungskanal eintretenden Teilchen.

Des Weiteren sieht die Erfindung in einer bevorzugten Variante vor, dass sich die Umlenkung an dem dem Druckmessraum abgewandten Ende des Verbindungskanals befindet. Eine solche Ausgestaltung hat den Vorteil, dass mit zunehmenden Abstand vom Druckmessraum die Umgebungstemperatur entsprechend abnimmt, was für den Messvorgang grundsätzlich günstig ist. Das dem Druckmessraum zugewandte Ende des Verbindungskanals befindet sich in unmittelbarer Nähe der heißen Explosionsgase und eine Anordnung der Umlenkung in diesem Bereich ist nicht so effizient in seiner Kühlwirkung, da auch die Umgebung am Beginn dieses Kanals sehr viel heißer ist wie an dem dem Druckmessraum abgewandten Ende des Verbindungskanals. Dadurch wird sowohl eine grundsätzlich kühlere, als Gegenstand ausgebildete Umlenkung erreicht, wie auch die von der Umlenkung erreichte Stromumlenkung der Gasdruckwelle an grundsätzlich kältere Flächen des Membranträgers oder Sensorträgers erreicht.

In einer weiteren bevorzugten Variante der Erfindung ist vorgesehen, dass die Umlenkung Teil des Sensorträgers ist. Der Sensorträger ist dabei z. B. als Einbauteil ausgebildet und besitzt ein entsprechendes Außengewinde, um diesen in ein entsprechendes Gewinde des Motorblockes einzudrehen. Der Sensorträger selber trägt den Membranträger, welcher die Membran trägt. Die Umlenkung ist dabei z. B. als einstückiges Teil des Sensorträgers oder aber der Sensorträger besteht aus mehreren Elementen, wobei die Umlenkung ein Element des Sensorträgers ist.

Aufgrund der großflächigen Verbindung des Sensorträgers mit dem gut gekühlten Motorblock erfährt auch der Sensorträger und daher auch die Umlenkung eine gute Kühlung.

Alternativ ist auch vorgesehen, dass die Umlenkung Teil des Membranträgers ist. Auch eine solche Variante ist Teil der Erfindung. Es ist z. B. vorgesehen, an dem Membranträger einen als Wärmetauscherflächen ausgebildeten Bereich vorzusehen, die als Umlenkung dienen und so die heiße Gasdruckwelle abkühlen bzw. den Temperaturgradient an der Membran bzw. im Membranträger entsprechend absenken. Es ist z. B. möglich, einen verhältnismäßig komplexeren Membranträger vorzusehen, der großflächige Kühlflächen aufweist und gegebenenfalls eine zusätzliche thermische Kopplung mit dem Sensorträger besitzt und zu einer entsprechenden Kühlung im Bereich der Membran zur Ausbildung eines möglichst geringen Temperaturkoeffizienten beizutragen.

In der Erfindung ist vorgesehen, dass die Umlenkung als ein den Verbindungskanal teilverschließendes Element mit zumindest einer seitlich, insbesondere unter einem Winkel zum Verbindungskanal, angeordneten Öffnung ausgebildet ist. Ein solcher Aufbau ist konstruktiv einfach realisierbar, da das Element z. B. als Scheibe oder Profilabschnitt ausgebildet ist und der Verbindungskanal, welcher z. B. als Bohrung im Sensorträger angeordnet ist, an dem dem Druckmessraum abgewandten Ende aufgesetzt wird. Alternativ ist es natürlich möglich, einen entsprechenden Sockel durch spanabhebende Bearbeitung aus dem Sensorträger heraus zu arbeiten, der den Endbereich einer Sackbohrung darstellt, wobei die Sackbohrung den Verbindungskanal bildet. Durch die Anordnung einer Öffnung bzw. seitlichen Bohrung wird ein Zugang zu dieser Sackbohrung bzw. dem Verbindungskanal geschaffen und die Umlenkung realisiert. Geschickterweise ist zwischen dem Membranraum, also dem Raum der sich direkt an der Membran befindet und dem Verbindungskanal noch ein Verbindungsraum vorgesehen, der insbesondere die Möglichkeit eröffnet, dass sich die zum Membranraum laufende Gasdruckwelle abkühlt. Geschickterweise wird der Verbindungsraum für einen optimalen Temperaturübergang optimiert ausgebildet, also z. B. auf große Wärmetauschflächen und auf verhältnismäßig hohe Strömungsgeschwindigkeiten der Gasdruckwelle geachtet. Hieraus ergibt sich z. B. eine verhältnismäßig lang gestreckte hülsenartige mit geringer Breite ausgebildete Gestaltung des Verbindungsraumes.

Geschickterweise wird dabei der Verbindungsraum einerseits vom Membranträger und andererseits von Teilen des Sensorträgers, insbesondere von dem Element begrenzt. Der Sensorträger ist gut mit der Kühlung des gesamten Verbrennungsmotors thermisch gekoppelt. Der Membranträger wird homogen durch die einlaufende Gasdruckwelle erwärmt und führt zu einem verhältnismäßig kleineren Temperaturkoeffizienten an der Membran, auch weil das Temperaturniveau, welches am Wärmeübergang besteht, abgesenkt wird.

In einer bevorzugten Variante der Erfindung ist vorgesehen, dass die Breite des Verbindungsraumes geringer ist als der Durchmesser oder die Breite des Verbindungskanales.

Durch eine solche Ausgestaltung ergibt sich eine höhere Strömungsgeschwindigkeit der Gasdruckwelle im Verbindungsraum als im Verbindungskanal und daher einen verbesserten Wärmeübergang zu dem den Verbindungsraum begrenzenden Bereichen, also bevorzugt dem Element bzw. dem Sensorträger oder dem Membranträger.

Geschickterweise ist vorgesehen, dass der Membranträger, insbesondere der der Membran abgewandte Bereich des Membranträgers für eine Kühlung der Gasdruckwelle dient. Somit wird der Gasdruckwelle geschickterweise Temperatur entzogen und es trifft eine abgekühlte Gasdruckwelle auf der Membran zur Messung des Druckes auf. Gleichzeitig erwärmt sich der Membranträger und daher auch die die Membran tatsächlich tragenden Bereiche des Membranträgers, um den Temperaturgradienten in der Membran entsprechend zu verringern.

Da auch das Element bzw. die Umlenkung bevorzugt thermisch gut an den Sensorträger gekoppelt ist, ist auch das Element bzw. die Umlenkung für eine Kühlung der Gasdruckwelle vorgesehen und dient hierfür.

In einer bevorzugten Variante der Erfindung wird vorgesehen, dass die Länge des Verbindungsbereiches zwischen dem Membranträger und dem Sensorträger größer ist als die Breite des Verbindungsraumes. Durch eine solche geometrische Ausgestaltung wird eine verhältnismäßig gute thermische Ankopplung des Membranträgers an dem Sensorträger erreicht. Daraus resultiert eine gute Kühlung des Membranträgers über den Sensorträger. Dabei wird die Länge des Verbindungsbereiches nicht nur durch dessen Breite definiert. Die Länge ist auch durchaus z. B. abgewinkelt zu verstehen, nämlich dann, wenn z. B. der Membranträger auf einen Flansch aufgesetzt wird und sowohl Stirnfläche wie auch die seitlichen Flächen in thermischen Kontakt mit dem Sensorträger stehen. Dies führt zu einer entsprechend größeren Ankopplungsfläche und daher zu einem verbesserten Wärmeübergang zwischen dem Membranträger und dem Sensorträger.

In einer weiteren vorzugsweisen Ausgestaltung der Erfindung ist vorgesehen, dass der Membranraum zumindest einseitig von der Membran begrenzt ist und die Höhe des Membranraumes größer ist als der Abstand im Verbindungsraum zwischen Membranträger und Sensorträger.

Die Höhe des Membranraumes ist dabei durch den Abstand der Membran zum Element oder einem anderen Element des Sensorträgers oder Membranträgers definiert. Vorzugsweise ist dabei der Membranraum zylinderartig oder scheibenartig ausgebildet. Hierauf ist die Erfindung aber in keinster Weise festgelegt. Durch die jetzt hier gewählte Dimension verlangsamt sich die einströmende Gasdruckwelle. Dadurch wird der Wärmeübergang verschlechtert, da dieser von der Strömungsgeschwindigkeit abhängt. Gerade im Bereich der Membran wird natürlich ein Einprägen von zusätzlicher Wärmemenge mit höherer Temperatur in die Membran nicht gewünscht, weswegen dies eine günstige Anordnung darstellt.

Geschickterweise besitzt die Membran bevorzugt auf der dem Membranraum abgewandten Seite eine Messvorrichtung für die druckbedingte Membranverformung. Diese ist z. B. als Dehnmessstreifen ausgebildet und gemäß der Wheatstoneschen Brückenschaltung realisiert. Die druckbedingte Membranverformung verändert den elektrischen Widerstand im Dehnmessstreifen, der durch die Messanordnung gemessen und ausgewertet werden kann.

Geschickterweise wird eine topfartige Ausbildung des Membranträgers vorgeschlagen, wobei die Membran von dem Boden des Topfes gebildet ist. Eine solche Ausgestaltung ist mechanisch einfach herstellbar und wird bevorzugt z. B. in Metall, Stahl, Eisen oder anderen Legierungen realisiert. Dabei ist es günstig, dass die Anordnung einstückig ausgebildet ist, also die Membran z. B. durch spanabhebende Bearbeitung aus dem Topf herausgearbeitet ist oder aber durch entsprechende Schweißverfahren oder sonstige Verbindungsverfahren als Boden des Topfes in die ringartige Mantelfläche des Membranträgers eingesetzt und so verbunden ist.

Bei der topfartigen Ausgestaltung des Membranträgers bilden die Mantelflächen auch den Verbindungsbereich zum Anschluss des Membranträgers am Sensorträger. Günstigerweise dient daher auch diese Mantelfläche zur Kühlung der Gasdruckwelle, indem diese durch die Umlenkung bevorzugt angeströmt werden.

In der Zeichnung ist die Erfindung schematisch dargestellt.

Es zeigen:
- Fig. 1: ein einer dreidimensionalen Ansicht den Sensorträger des erfindungsgemäßen Drucksensors und
- Fig. 2: einen Schnitt durch den erfindungsgemäßen Drucksensor.

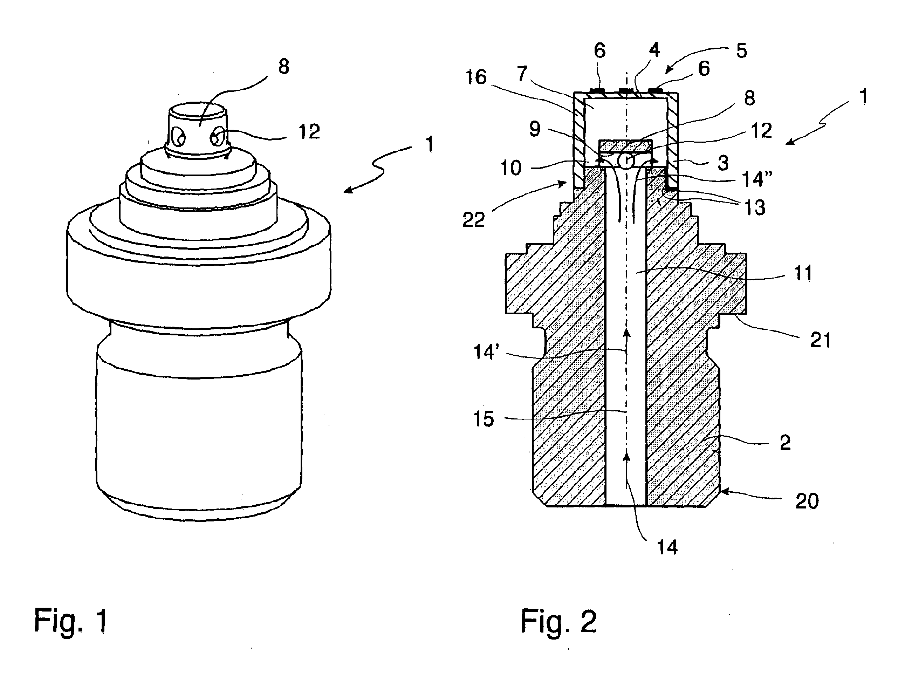

In Fig. 1, 2 ist ein beispielhafter Drucksensor 1 in verschiedenen Varianten dargestellt. Zu beachten ist, dass Fig. 2 nicht eine maßstabsgemäße Schnittdarstellung des in Fig. 1 in dreidimensionaler Ansicht gezeigten Drucksensors 1 ist. In Fig. 1 ist des Weiteren zu beachten, dass hier das die Umlenkung 9 bildende Element 8 mit den Öffnungen 12 sichtbar ist, welches in der Darstellung nach Fig. 2 durch den Membranträger 3 verdeckt ist. Dabei ist zu beachten, dass der Drucksensor 1 noch ein weiteres den Membranträger 3 überdeckendes Gehäuse aufweist, was aus Darstellungs- und Übersichtlichkeitsgründen hier nicht gezeigt ist.

Der Drucksensor 1 ist im Wesentlichen aus zwei Elementen, dem Sensorträger 2 und dem Membranträger 3 aufgebaut. Der Sensorträger 2 wird mit seinem unteren Ende 20 in eine Öffnung des Druckmessraumes eingesetzt, z. B. eingeschraubt, bis z. B. der Flansch 21 an der Begrenzungswand des Druckmessraumes anliegt.

Der untere Bereich 20 ist daher dem Druckmessraum zugewandt, im Druckmessraum laufen z. B. bei Verbrennungsmotoren mit schneller Folge Verbrennungsprozesse ab, die zu entsprechenden Gasdruckwellen und Temperaturschockwellen führen.

Der Sensorträger 2 besitzt eine in diesem Ausführungsbeispiel koaxial angeordnete, als Verbindungskanal 11 dienende Bohrung. Die Bohrung durchdringt den Sensorträger 2 fast vollständig und wird an dem dem unteren, auch heißen Ende des Drucksensors 1 abgewandten Ende 22 von einem Element 8 verschlossen.

Der Weg der Druckwelle ist mit Pfeilen gekennzeichnet und mit den Bezugsziffern 14, 14' und 14'' gekennzeichnet, wobei die Abfolge der Welle durch die zunehmende Strichzahl des Bezugszeichens 14 gekennzeichnet ist. Die Druckwelle tritt aus dem Druckmessraum in den Verbindungskanal 11 ein und pflanzt sich dann nach oben fort.

Um zu vermeiden, dass diese heiße Druckwelle direkt die Membran 4 trifft, ist erfindungsgemäß eine Umlenkung 9 vorgesehen.

An dem oberen Ende 22 des Sensorträgers 2 ist ein topfartiger Membranträger 3 vorgesehen, dessen Boden die Membran 4 bildet. Der Membranträger 3 mit der Membran 4 überdeckt dabei das Element 8. Zwischen dem Element 8 und der Membran 4 ergibt sich der Membranraum 7. Der Membranraum 7 steht in Verbindung mit dem Verbindungskanal 11 über den Verbindungsraum 10. Da auf dem oberen Ende 22 des Sensorträgers 2 das Element 8 angeordnet ist und eigentlich das innenliegende, dem Druckmessraum abgewandte Ende des Verbindungkanals 11 verdeckt, besitzt das Element 8 eine Mehrzahl von Öffnungen 12, die eine Verbindung zwischen dem Verbindungsraum 10 und dem Verbindunskanal 11 herstellen. Für eine möglichst gleichartige, rotationssymmetrische Durchströmung sind Öffnungen 12 äquidistant am Umfang des scheibenartigen Elementes 8 vorgesehen. Zu beachten ist, dass die Flächennormale der Öffnungen 12 winklig, insbesondere rechtwinklig zur Längsachse 15 des Verbindungskanals 11 stehen.

Durch diese winklige Anordnung, hier z. B. rechtwinklige Anordnung, der Öffnungen 12 bezüglich des Verbindungskanales 11 bildet das Element 8 eine Umlenkung 9 für die im Verbindungskanal 11 hinauflaufende Druckwelle 14, was insbesondere im Bereich des Elementes 8 durch die abgelenkten Pfeile 14'' gekennzeichnet ist.

Damit wird klar, dass die heiße Gasdruckwelle 14'' zum einen an der dem Verbindungskanal 11 zugewandten Seite des Elementes 8 entlangstreicht und aufgrund der guten thermischen Kopplung des Elementes 8 an den Sensorträger 2 hier eine Abkühlung erfährt. Danach trifft die bereits etwas abgekühlte Druckwelle auf das der Membran 4 abgewandte Ende des Membranträgers 3, der über den Verbindungsbereich 13 ebenfalls thermisch gut mit dem Sensorträger 2 verbunden ist.

Der Sensorträger 2 ist, wie bereits ausgeführt, im gekühlten Motorblock oder Begrenzungswand des Druckmessraumes eingesetzt und auf verhältnismäßig niedrigen Temperaturniveau gehalten.

Die Gasdruckwelle 14 streicht nun an der Mantelfläche 16 des Membranträgers 3 entlang und trifft erst nach einer gewissen Abkühlung auf die Membran 4. Das bereits abgesenkte Temperaturniveau in diesem Bereich und die bereits angewärmte Mantelfläche 16 des Membranträgers 3 führt dazu, dass die Membran 4 einen geringeren Temperaturgradienten aufweist.

Geschickterweise ist als Messvorrichtung 5 auf der dem Membranraum 7 abgewandten Seite der Membran 4 mehrere Dehnmessstreifen 6, z. B. im Rahmen einer Wheatstoneschen Brückenschaltung angeordnet. Durch die Erfindung wird überraschenderweise erreicht, dass die Tempteraturverteilung auf der Membran verhältnismäßig homogen ist, da der Gradient der Temperaturverteilung aufgrund der erfindungsgemäßen Anordnung deutlich abgesenkt wird. Hieraus resultiert eine erheblich geringe Messungenauigkeit.

Die Umlenkung bewirkt zum einen eine Kühlmöglichkeit für die einlaufende Gasdruckwelle 14'', wie auch ein Ablenken bzw. Umlenken der Gasdruckwelle und anderer Teile des Sensorträgers 2 bzw. des Membranträgers 3.

Der Membranträger 3 ist auf einen Sockel des Sensorträgers 2 aufgeschraubt oder aufgesteckt und druckdicht verbunden, z. B. verschweißt. Es bildet sich ein abgestufter Verbindungsbereich 13 zwischen dem Membranträger 3 und dem Sensorträger 2, um eine gute thermische Kopplung, z. B. für Kühlzwecke zu realisieren.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Drucksensor für die Druckmessung einer Gasdruckwelle, bestehend aus einem Sensorträger (2), an welchem ein eine Membran (4) aufnehmender Membranträger (3) angeordnet ist, und der Sensorträger (2) einen verbindungskanal (11) aufweist, um einen vor der Membran (4) angeordneten Membranraum (7) mit einem Druckmessraum zu verbinden und mindestens eine Umlenkung (9) vorgesehen ist, durch welche die von dem Druckmessraum durch den Verbindungskanal (11) in den Membranraum (7) laufende heiße Gasdruckwelle eine Kühlung erfährt, **dadurch gekennzeichnet, dass** die Umlenkung (9) als ein, den Verbindungskanal (11) teilverschließendes Element (8) mit zumindest einer seitlichen, unter einem Winkel zum Verbindungskanal (11) angeordneten Öffnung (12) ausgebildet ist und die Umlenkung derart angeordnet ist, dass die hoch laufende Gasdruckwelle zunächst den Membranträger (3) und erst dann die Membran (4) erreicht.

2. Drucksensor nach Anspruch 1, **dadurch gekennzeichnet, dass** in Richtung des Verbindungskanals (11) die Membran (4) von der Umlenkung (9) verdeckt ist.

3. Drucksensor nach einem der vorhergehenden Ansprüche, **dadurch gekennzeichnet, dass** sich die Umlenkung (9) an dem, dem Druckmessraum abgewandten Ende (20) des Verbindungskanals (11) befindet.

4. Drucksensor nach einem der vorhergehenden Ansprüche, **dadurch gekennzeichnet, dass** die Umlenkung (9) Teil des Sensorträgers (2) oder Teil des Membranträgers (3) ist.

5. Drucksensor nach einem der vorhergehenden Ansprüche, **dadurch gekennzeichnet, dass** zwischen dem Membranraum (7) und dem Verbindungskanal (11) ein Verbindungsraum (10) vorgesehen ist.

6. Drucksensor nach Anspruch 5, **dadurch gekennzeichnet, dass** der Verbindungsraum (10) einerseites vom Membranträger (3) und andererseits von Teilen des Sensorträgers (2), insbesondere von dem Element (8) begrenzt ist.

7. Drucksensor nach einem der Ansprüche 5 und 6, **dadurch gekennzeichnet, dass** die Breite des Verbindungsraumes (10) geringer ist als der Durchmesser oder die Breite des Verbindungskanals (11).

8. Drucksensor nach einem der Ansprüche 5 bis 7, **dadurch gekennzeichnet, dass** die Länge des Verbindungsbereiches (13) zwischen dem Membranträger (3) und dem Sensorträger (2) größer ist als die Breite des Verbindungsraumes (10) .

9. Drucksensor nach einem der Ansprüche 5 bis 8, **dadurch gekennzeichnet, dass** der Membranraum (7) zumindest einseitig von der Membran (4) begrenzt ist und die Höhe des Membranraumes (7) größer ist als der Abstand im verbindungsraum (10) zwischen Membranträger (3) und Sensorträger (2).

10. Drucksensor nach einem der vorhergehenden Ansprüche, **dadurch gekennzeichnet, dass** der Membranträger (3), insbesondere die der Membran (4) abgewandten Bereiche des Membranträgers (3), für eine Kühlung der Gasdruckwelle (14) dient.

11. Drucksensor nach einem der vorhergehenden Ansprüche, **dadurch gekennzeichnet, dass** das Element (8) für eine Kühlung der Gasdruckwelle (14) dient.

12. Drucksensor nach einem der vorhergehenden Ansprüche, **dadurch gekennzeichnet, dass** die Membran (4), bevorzugt auf der dem Membranraum (7) abgewandten Seite eine Messvorrichtung (5) für die druckbedingte Membranverformung aufweist.

13. Drucksensor nach einem der vorhergehenden Ansprüche, **gekennzeichnet durch** eine topfartige Ausbildung des Membranträgers (3), wobei die Membran (4) von dem Boden des Topfes gebildet ist und/oder die Mantelfläche (16) des topfartigen Membranträgers (3) für eine Kühlung der Gasdruckwelle (14) dient.

## Claims

1. Pressure sensor for the measurement of a gas pressure wave consisting of a sensor carrier (2) holding a diaphragm carrier (3) with a diaphragm (4), a connection canal (11) connecting a cavity (7) located in front of the diaphragm (4) with a pressure measurement chamber and at least a deviation element (9) allowing to reduce the temperature of the hot gas pressure wave during its propagation from the pressure measurement chamber through the connection canal (11) into the diaphragm cavity (7), **characterized** therein that the deviation element (9) is built of an element (8) partially closing the connection canal (11) with at least a lateral opening (12) with a certain angle to the connection canal (11) and therein that the deviation element has a configuration so that the mounting gas pressure wave reaches first the diaphragm carrier (3) and then the diaphragm (4).

2. Pressure sensor according to claim 1, **characterized in that** the deviation element (9) closes the direct path between the connection canal (11) and the diaphragm (4).

3. Pressure sensor according to one of the preceding claims, **characterized in that** the deviation element (9) is situated at the end (20) of the connection canal (11) at the opposite end of the pressure measurement chamber.

4. Pressure sensor according to one of the preceding claims, **characterized in that** the deviation element (9) is part of the sensor carrier (2) or of the diaphragm carrier (3) .

5. Pressure sensor according to one of the preceding claims, **characterized in that** a connection room (10) is situated between the diaphragm cavity (7) and the connection canal (11) .

6. Pressure sensor according to claim 5, **characterized in that** the connection room (10) is limited on one side by the diaphragm carrier (3) and on the other side by parts of the sensor carrier and in particular by the element (8) .

7. Pressure sensor according to one of the claims 5 or 6, **characterized in that** the width of the connection room (10) is less than the diameter or the width of the connection canal (11).

8. Pressure sensor according to one of the claims 5 to 7, **characterized in that** the length of the connection zone (13) between the diaphragm carrier (3) and the sensor carrier (2) is greater than the width of the connection room (10).

9. Pressure sensor according to one of the claims 5 to 8, **characterized in that** the diaphragm cavity (7) is at least limited on one side by the diaphragm (4) and **in that** the height of the diaphragm cavity (7) is greater that the distance between the diaphragm carrier (3) and the sensor carrier (2) within the connection room (10).

10. Pressure sensor according to one of the preceding claims, **characterized in that** the diaphragm carrier (3) and in particular the parts of the diaphragm carrier (3) not facing the diaphragm (4) act as cooling elements for the gas pressure wave (14).

11. Pressure sensor according to one of the preceding claims, **characterized in that** the element (8) is used to cool the gas pressure wave (14).

12. Pressure sensor according to one of the preceding claims, **characterized in that** the diaphragm (4) and preferably the surface of the diaphragm (4) which is not inside the diaphragm cavity (7) is attached to a measurement device (5) in order to measure the pressure dependant deformation of the diaphragm.

13. Pressure sensor according to one of the preceding claims, **characterized in that** the diaphragm carrier (3) has a pot-like shape wherein the diaphragm (4) builds the bottom of the pot and/or **in that** the lateral surface (16) of the pot shaped diaphragm carrier (3) acts as a cooling element for the gas pressure wave (14).

## Revendications

1. Capteur de pression, destiné à mesurer la pression d'une onde de pression d'un gaz, consistant en un support de capteur (2) muni d'un support de membrane (3) pour maintenir une membrane (4), d'un canal de liaison (11) connectant une chambre membrane (7) située devant la membrane (4) avec une chambre de mesure de pression et d'au moins d'un élément déviateur (9) permettant de refroidir l'onde de pression de gaz chaud au passage du canal de liaison (11) vers la chambre à membrane (7), **caractérisé en ce que** l'élément déviateur (9) est un élément (8) obturant partiellement le canal de liaison (11) et comportant au moins une ouverture latérale (12) formant un certain angle par rapport au canal de liaison (11) et **en ce que** l'élément déviateur est configuré de facon à ce que l'onde de pression de gaz montante atteint d'abord le support de membrane (3) avant d'atteindre la membrane (4).

2. Capteur de pression selon la revendication 1, **caractérisé en ce que** l'élément déviateur (9) obture le chemin direct entre le canal de liaison (11) et la membrane (4).

3. Capteur de pression selon l'une des deux revendications précédentes, **caractérisé en ce que** l'élément déviateur (9) est situé à l'extrémité (20) du canal de liaison (11) opposée à celle à laquelle la chambre de mesure est connectée.

4. Capteur de pression selon une des revendications précédentes, **caractérisé en ce que** l'élément déviateur (9) est une partie du support de capteur (2) ou du support de membrane (3).

5. Capteur de pression selon une des revendications précédentes, **caractérisé en ce qu'**il existe un espace de liaison (10) entre la chambre à membrane (7) et le canal de liaison (11).

6. Capteur de pression selon la revendication 5, **caractérisé en ce que** l'espace de liaison (10) est limité de part et d'autre par le support de membrane (3) et par des parties du support de capteur (2) et en particulier par l'élément (8) .

7. Capteur de pression selon une des revendications 5 ou 6, **caractérisé en ce que** la largeur de l'espace de liaison (10) est inférieure au diamètre ou à la largeur du canal de liaison (11).

8. Capteur de pression selon une des revendications 5 à 7, **caractérisé en ce que** la longueur de la zone de liaison (13) s'étendant entre le support de membrane (3) et le support de capteur (2) est supérieure à la largueur de l'espace de liaison (10).

9. Capteur de pression selon une des revendications 5 à 8, **caractérisé en ce que** la chambre à membrane (7) est au moins unilatéralement limitée par la membrane (4) et **en ce que** la hauteur de la chambre membrane (7) est supérieure à la distance à l'intérieur de l'espace de liaison (10) entre le support de membrane (3) et le support de capteur (2).

10. Capteur de pression selon une des revendications précédentes, **caractérisé en ce que** le support de membrane (3) et en particulier les parties du support de membrane (3) n'étant pas en vis-à-vis avec le membrane (4) servent à refroidir l'onde de pression de gaz chaud (14).

11. Capteur de pression selon une des revendications précédentes, **caractérisé en ce que** l'élément (8) sert comme élément de refroidissement de l'onde de pression de gaz chaud (14).

12. Capteur de pression selon une des revendications précédentes, **caractérisé en ce que** la membrane (4) comporte sur sa face opposée à la chambre à membrane (7) un dispositif de mesure (5) évaluant la déformation de la membrane liée à la pression.

13. Capteur de pression selon une des revendications précédentes, **caractérisé par** une forme de casserole du support de membrane (3) dont le fond est formé par la membrane (4) et/ou en ce que la surface latérale (16) du support de membrane (3) en forme de casserole sert à refroidir l'onde de pression de gaz chaud (14).
